# EUROPÄISCHE PATENTANMELDUNG

(11) **EP 4 509 360 A1**
(43) Veröffentlichungstag der Anmeldung: **19.02.2025**
(21) Anmeldenummer: 24194664.9
(22) Anmeldetag: 14.08.2024
(51) Int. Cl.: B60Q 1/00, F21S 43/20, G01S 7/521, G01S 15/931

(54) **FAHRZEUG-HECKLEUCHTE MIT INTEGRAL-UMFELDSENSOR**

(30) Priorität: 17.08.2023 DE 102023121990
(71) Anmelder: Daimler Truck AG, 70771 Leinfelden-Echterdingen (DE)
(72) Erfinder: Korner, Philip, 70771 Leinfelden-Echterdingen (DE)

(57) **Zusammenfassung**

Die Erfindung betrifft eine Heckleuchte für ein Kraftfahrzeug, wobei in eine Abdeckscheibe (1) der Heckleuchte eine Sendeeinheit (3) und/oder eine Empfangseinheit (5) einer Umfeldsensoreinrichtung integriert ist, sodass die Abdeckscheibe (1) eine Sendefunktion und/oder Empfangsfunktion der Umfeldsensoreinrichtung übernimmt.

## Beschreibung

Die Erfindung betrifft eine Heckleuchte für ein Kraftfahrzeug, sowie ein Fahrzeug mit einer solchen Heckleuchte.

Im Stand der Technik ist eine Vielzahl von Lichtanlagen für Fahrzeuge bekannt. Diese weisen einerseits typischerweise eine oder mehrere der Funktionen auf, eine Umgebung um das Fahrzeug zu beleuchten, eine Signalwirkung darzustellen um für andere Verkehrsteilnehmer gesehen zu werden, oder um spezielle Signale auszugeben, beispielsweise eine Indikation über die Intention einer Rückwärtsfahrt oder eines Abbiegevorgangs.

Die DE 10 2006 007 712 A1 betrifft in diesem Zusammenhang eine Leuchte, insbesondere Heckleuchte, eines Fahrzeuges, vorzugsweise eines Kraftfahrzeuges, mit wenigstens zwei Signallichtern, die jeweils wenigstens ein Leuchtmittel aufweisen, wobei die Signalfunktion wenigstens des einen Signallichtes in Abhängigkeit von fahrzeug- und/oder sensorspezifischen Daten einschaltbar oder veränderbar ist.

In modernen Fahrzeugen werden zunehmend Sensorsysteme verbaut, die, wenn sie eine Umgebung des Fahrzeugs erfassen sollen, bevorzugt an einer äußeren Seite der Karosserie oder eines Stoßfängers angeordnet sind. Dies gilt beispielsweise für Umfeldsensoren zur präzisen Abstandsmessung und Raumüberwachung beim Parken und Rangieren, wie beispielsweise Ultraschallabstandssensoren für Fahrzeuge und Nutzfahrzeuge im Besonderen. Die Positionierung von rückwärtigen Umfeldsensoren ab Werk gestaltet sich insbesondere bei Pritschenfahrzeugen mit verschiedenen Fahrzeugaufbauten und der hohen Fahrzeugvarianz als schwierig.

Aufgabe der Erfindung ist es, die Anordnung eines Umfeldsensors an einem Fahrzeug mit Erfassungsbereich zur Rückseite des Fahrzeugs zu verbessern.

Die Erfindung ergibt sich aus den Merkmalen der unabhängigen Ansprüche. Vorteilhafte Weiterbildungen und Ausgestaltungen sind Gegenstand der abhängigen Ansprüche.

Ein erster Aspekt der Erfindung betrifft eine Heckleuchte für ein Kraftfahrzeug, wobei in eine Abdeckscheibe der Heckleuchte eine Sendeeinheit und/oder eine Empfangseinheit einer Umfeldsensoreinrichtung integriert ist, sodass die Abdeckscheibe eine Sendefunktion und/oder Empfangsfunktion der Umfeldsensoreinrichtung übernimmt.

Die Abdeckscheibe bildet somit gemeinsam mit zumindest Teilen der Umfeldsensoreinrichtung ein vormontiertes Modul, das lediglich mit dem Gehäuse der Heckleuchte und ggf. mit dem Bordnetz des Kraftfahrzeugs verbunden werden muss. Die Heckleuchte selbst wird damit durch die zumindest teilweise Integration des Umfeldsensors funktionell aufgewertet und ergibt eine kombinierte Heckleuchte und Umfeldsensor in einem gemeinsamen Modul. Eine solche Heckleuchte mit integriertem Umfeldsensor eignet sich insbesondere, aber nicht ausschließlich, zur präzisen Abstandsmessung und Raumüberwachung beim Parken und Rangieren von Nutzfahrzeugen.

Die Abdeckscheibe ist bevorzugt aus transparentem Kunststoff wie beispielsweise PMMA gefertigt und weist den Zweck auf, die Leuchtelemente der Heckleuchte vor Feuchtigkeit und Schmutz zu schützen.

Die Sendeeinheit und die Empfangseinheit können getrennt voneinander ausgeführt und angeordnet werden, sie können jedoch auch in ein gemeinsames Modul integriert werden. Aufgaben der Steuereinheit bei getrennter Sendeeinheit und Empfangseinheit sind die Ansteuerung des Piezoelements der Sendeeinheit, der Empfang und die Verstärkung der Signale aus der Empfangseinheit, die Berechnung der Laufzeit des Signals, daraus die Ableitung des Abstands zum Objekt, an dem das Signal reflektiert wird, die Bereitstellung digitaler Informationen über ein Bussystem an eine Steuereinrichtung des Fahrzeugs, und/oder die Bereitstellung eines analogen Signals mit einem linearen Zusammenhang zum Objektabstand.

Sind dagegen die Sendeeinheit und die Empfangseinheit in einem kombinierten Modul integriert, so sind die Funktionen und Aufgaben der Steuereinheit die kurzzeitige, gepulste Ansteuerung des gemeinsamen Piezoelements der gemeinsamen Membran, der Empfang und die Verstärkung des Signals an dieser Membran, wiederum die Berechnung der Laufzeit des Signals und die Herleitung des Abstands zum Objekt, an dem das Signal reflektiert wird, sowie die Bereitstellung digitaler Informationen über ein Bussystem an eine Steuereinrichtung des Fahrzeugs, und/oder die Bereitstellung eines analogen Signals mit einem linearen Zusammenhang zum Objektabstand.

Es sind vorteilhafte Wirkungen der Erfindung, dass die Robustheit und der Schutz der Umfeldsensoreinrichtung, insbesondere der Sendeeinheit und der Empfangseinheit durch die Nutzung einer Abdeckscheibe einer Heckleuchte als Membran verbessert werden. Die präzise Abstandsmessung, beispielsweise durch Ultraschalltechnologie, kann jedoch beibehalten werden. Indem separate Sensoren eingespart werden, sowie durch den integralen Aufbau der Heckleuchte zusammen mit der Umfeldsensoreinrichtung können Kosten verringert werden.

Gemäß einer vorteilhaften Ausführungsform ist die Umfeldsensoreinrichtung eine Ultraschallsensoreinheit.

Gemäß einer weiteren vorteilhaften Ausführungsform ist zumindest ein Bereich der Abdeckscheibe als Membran der Sendeeinheit und/oder der Empfangseinheit der Ultraschallsensoreinheit ausgeführt.

Gemäß einer weiteren vorteilhaften Ausführungsform ist der Bereich der Abdeckscheibe als gemeinsame Membran der Sendeeinheit und der Empfangseinheit ausgeführt.

Gemäß einer weiteren vorteilhaften Ausführungsform weist die Umfeldsensoreinrichtung einen Halter an der Innenseite der Abdeckscheibe der Heckleuchte auf, von dem ein Piezoelement aufgenommen ist, das dazu ausgeführt ist, die Membran auszulenken.

Gemäß einer weiteren vorteilhaften Ausführungsform weist die Abdeckscheibe eine Durchgangsöffnung auf, innerhalb derer die Membran eingespannt ist.

Gemäß einer weiteren vorteilhaften Ausführungsform weist die Umfeldsensoreinrichtung eine Steuereinheit auf, die mit einem Bordcomputer des Kraftfahrzeugs zur Signalverarbeitung verbunden ist und dazu ausgeführt ist, das Piezoelement anzusteuern, wobei die Steuereinheit dazu ausgeführt ist, die Signale der Empfangseinheit zum Bordcomputer zu leiten.

Gemäß einer weiteren vorteilhaften Ausführungsform ist die Steuereinheit in die Abdeckscheibe integriert.

Gemäß einer weiteren vorteilhaften Ausführungsform ist die Umfeldsensoreinrichtung mit einer bordnetzunabhängigen Stromquelle ausgestattet.

Gemäß einer weiteren vorteilhaften Ausführungsform ist die Umfeldsensoreinrichtung mit einem Bordnetz des Kraftfahrzeugs elektrisch verbunden.

Ein weiterer Aspekt der Erfindung betrifft ein Fahrzeug mit einer Heckleuchte wie oben und im Folgenden beschrieben.

Vorteile und bevorzugte Weiterbildungen des vorgeschlagenen Fahrzeugs ergeben sich durch eine analoge und sinngemäße Übertragung der im Zusammenhang mit der vorgeschlagenen Heckleuchte vorstehend gemachten Ausführungen.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1:: Eine Heckleuchte gemäß einem Ausführungsbeispiel der Erfindung.
- Fig. 2:: Einen Teil einer Umfeldsensoreinrichtung in einer Heckleuchte gemäß einem Ausführungsbeispiel der Erfindung.

Die Darstellungen in den Figuren sind schematisch und nicht maßstäblich.

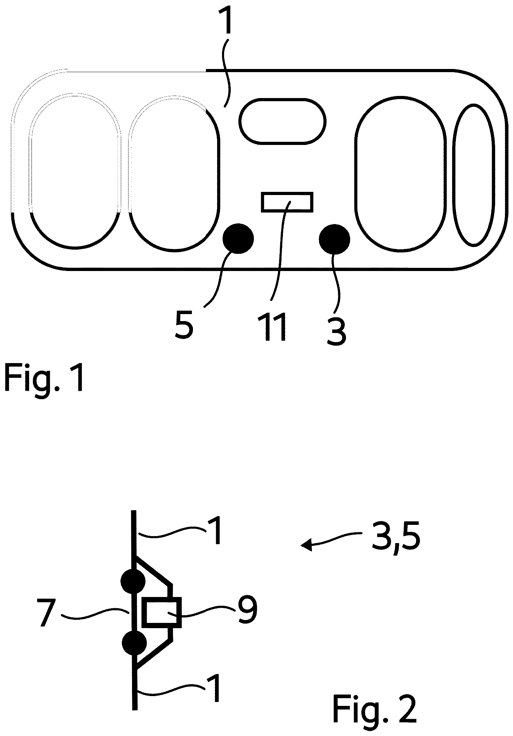

Fig. 1 zeigt eine Heckleuchte für ein Nutzfahrzeug. Hinter einer Abdeckscheibe 1 der Heckleuchte sind mehrere Leuchtelemente (in der Fig. 1 nicht bezeichnet) angeordnet. Zudem ist in die Abdeckscheibe 1 eine Umfeldsensoreinrichtung in der Ausführung einer Ultraschallsensoreinheit integriert. Diese umfasst eine Steuereinheit 11, eine Empfangseinheit 5 und eine Sendeeinheit 3. Die Steuereinheit 11 versorgt die übrige Umfeldsensoreinrichtung mit ausreichender elektrischer Spannung, empfängt Signale der Empfangseinheit 5 und steuert die Sendeeinheit 3 zum Aussenden von Signalen an, deren Reflexion an der Empfangseinheit 5 erhalten werden können. Für weitere Details zum Aufbau der Empfangseinheit 5 bzw. Sendeeinheit 3, siehe Fig. 2.

Fig. 2 zeigt eine Ultraschallsensoreinheit (ohne Steuereinheit 11) genauer. Definierte Flächen der Abdeckscheibe 1 selbst werden dabei als Membran 7 verwendet. Die Abdeckscheibe 1 umfasst zumindest eine mechanische Schnittstelle für ein Piezoelement 9, das einen definierten Bereich der Abdeckscheibe 7 in Schwingung versetzt. Hierbei bestehen zwei Möglichkeiten: Zum einen können zwei als Membrane 7 ausgeführte Bereiche der Abdeckscheibe 1 zur separaten Ausbildung von Sendeeinheit 3 und Empfangseinheit 5 vorgesehen sein (wie in Fig. 1 angedeutet). Dann weist die Sendeeinheit 3 eine eigene Membran 7 und ein eigenes Piezoelement 9 auf, und die Empfangseinheit 5 eine eigene Membran 7 und ein eigenes Piezoelement 9 auf. Zum anderen kann durch gepulstes, abwechselndes Senden und Empfangen an einer einzigen Membran 7 die gemeinsame Membran 7 als Sendeeinheit 3 und Empfangseinheit 5 agieren, wofür ein einzelnes Piezoelement 9 für die Sendeeinheit 3 und für die Empfangseinheit 5 vorgesehen ist. Hinter dem jeweiligen Piezoelement 9 ist eine Kunststoffabdeckung angeordnet, um die Dichtigkeit zu den Leuchtelementen in der Heckleuchte gewährleisten zu können. Die Empfangseinheit 5 dient in jedem Fall dazu, um die an Objekten reflektierten, akustischen Wellen zu empfangen, welche durch eine vom Piezoelement 9 der Sendeeinheit 3 angeregte Membran 7 emittiert wurden. Die resultierenden Signale werden in beiden Fällen von der Steuereinheit 11 mit Signalverstärker empfangen, gefiltert und verarbeitet. Über ein Echo-Laufzeitverfahren wird die Entfernung zu Objekten bestimmt.

Obwohl die Erfindung im Detail durch bevorzugte Ausführungsbeispiele näher illustriert und erläutert wurde, ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente, vornehmen kann, ohne den Schutzbereich zu verlassen, der durch die Ansprüche und deren rechtliche Entsprechungen, wie etwa weitergehende Erläuterungen in der Beschreibung, definiert wird.

### Bezugszeichenliste

- 1: Abdeckscheibe
- 3: Sendeeinheit
- 5: Empfangseinheit
- 7: Membran
- 9: Piezoelement
- 11: Steuereinheit

## Patentansprüche

1. Heckleuchte für ein Kraftfahrzeug, wobei in eine Abdeckscheibe (1) der Heckleuchte eine Sendeeinheit (3) und/oder eine Empfangseinheit (5) einer Umfeldsensoreinrichtung integriert ist, sodass die Abdeckscheibe (1) eine Sendefunktion und/oder Empfangsfunktion der Umfeldsensoreinrichtung übernimmt.

2. Heckleuchte nach Anspruch 1,
wobei die Umfeldsensoreinrichtung eine Ultraschallsensoreinheit ist.

3. Heckleuchte nach Anspruch 2,
wobei zumindest ein Bereich der Abdeckscheibe (1) als Membran (7) der Sendeeinheit (3) und/oder als Membran (7) der Empfangseinheit (5) der Ultraschallsensoreinheit ausgeführt ist.

4. Heckleuchte nach einem der vorhergehenden Ansprüche,
wobei der Bereich der Abdeckscheibe (1) als gemeinsame Membran (7) der Sendeeinheit (3) und der Empfangseinheit (5) ausgeführt ist.

5. Heckleuchte nach einem der Ansprüche 3 bis 4,
wobei die Umfeldsensoreinrichtung einen Halter an der Innenseite der Abdeckscheibe (1) der Heckleuchte aufweist, von dem ein Piezoelement (9) aufgenommen ist, das dazu ausgeführt ist, eine bzw. die Membran (7) auszulenken.

6. Heckleuchte nach Anspruch 5,
wobei die Abdeckscheibe (1) eine Durchgangsöffnung aufweist, innerhalb derer die Membran (7) eingespannt ist.

7. Heckleuchte nach einem der Ansprüche 5 bis 6,
wobei die Umfeldsensoreinrichtung eine Steuereinheit (11) aufweist, die mit einem Bordcomputer des Kraftfahrzeugs zur Signalverarbeitung verbunden ist und dazu ausgeführt ist, das Piezoelement (9) anzusteuern, wobei die Steuereinheit (11) dazu ausgeführt ist, die Signale der Empfangseinheit (5) zum Bordcomputer zu leiten.

8. Heckleuchte nach Anspruch 7,
wobei die Steuereinheit (11) in die Abdeckscheibe (1) integriert ist.

9. Heckleuchte nach einem der vorhergehenden Ansprüche,
wobei die Umfeldsensoreinrichtung mit einem Bordnetz des Kraftfahrzeugs elektrisch verbunden ist.

10. Fahrzeug mit einer Heckleuchte nach einem der vorhergehenden Ansprüche.
